# EUROPEAN PATENT SPECIFICATION

(11) **EP 0 589 514 B1**
(45) Date of publication and mention of the grant of the patent: **03.06.1998**
(21) Application number: 93202666.9
(22) Date of filing: 15.09.1993
(51) Int. Cl.: B21J 5/12, B21K 25/00, F16C 17/08

(54) **Method of manufacturing a dynamic groove bearing, method of manufacturing a data storage unit provided with such a groove bearing; method of manufacturing a rotatable scanning unit provided with such a groove bearing, and method of manufacturing a magnetic-tape device provided with such a scanning unit**
Verfahren zur Herstellung eines dynamischen Rillenlagers; Verfahren zur Herstellung einer Datenspeichereinheit versehen mit einem derartigen Rillenlager; Verfahren zur Herstellung einer drehbaren Abtasteinheit versehen mit einem derartigen Rillenlager ; und Verfahren zur Herstellung eines Magnetbandgerätes versehen mit einer derartigen Abtasteinheit
Procédé de fabrication d'un palier à gorges, procédé de fabrication d'une unité de stockage de données muni d'un tel palier à gorges; procédé de fabrication d'une unité d'exploration rotative muni d'un tel palier à gorges, et procédé de fabrication d'un appareil à bande magnétique muni d'une telle unité d'exploration

(30) Priority: 21.09.1992 EP 92202886
(43) Date of publication of application: 30.03.1994
(73) Proprietor: Philips Electronics N.V., 5621 BA Eindhoven (NL)
(72) Inventor: Tielemans, Leonardus Petrus Maria, NL-5656 AA Eindhoven (NL)
(74) Representative: Cuppens, Hubertus Martinus Maria

(56) References cited:
- CH-A- 575 555
- DE-A- 2 454 673
- DE-A- 2 721 649
- FR-A- 2 446 953
- NL-A- 134 857

## Description

The invention relates to a method of manufacturing a dynamic groove bearing having an internal bearing part which is arranged coaxially relative to an external bearing part, which bearing parts are rotatable relative to one another and experience at least an axial bearing force during this, by which method the bearing parts are provided with co-operating bearing surfaces, the bearing surface of one of the bearing parts being shaped and simultaneously provided with a pattern of grooves by means of a die which has a die pattern corresponding to the pattern of grooves.

The invention further relates to a method of manufacturing a data-storage unit comprising an information disc and a scanning unit for co-operating with the information disc, which disc is rotatably supported in a cassette-shaped housing by means of two dynamic groove bearings, the housing comprising two main walls extending parallel to and on either side of the information disc, according to which method the external bearing parts of the dynamic groove bearings are integrated into said main walls, respectively, and are each provided with a pattern of grooves.

The invention also relates to a method of manufacturing a rotatable scanning unit with a base drum which has an outer wall with a helical magnetic-tape guide and a scanning drum which is rotatable relative to the base drum and which has at least one magnetic head, according to which method the scanning unit is provided with a dynamic groove bearing, the base drum being provided with an external bearing part of the dynamic groove bearing.

Finally, the invention also relates to a method of manufacturing a magnetic-tape device, according to which method the magnetic-tape device is provided with a rotatable scanning unit, a space for the accommodation of a magnetic-tape cassette, and a mechanism for transporting and guiding a magnetic tape along the scanning unit.

A method of the kind mentioned in the opening paragraphs for manufacturing a dynamic groove bearing is mentioned in DE-A-24 54 673 which relates to a method for manufacturing a die which is used for coining a pattern of spiral grooves in a concave bearing surface and for finally shaping said concave bearing surface. According to DE-A-24 54 673, the known die is made of a material having a high rigidity, so that deformation of the die under the influence of the high coining forces to be applied on the bearing surface are prevented as far as possible.

A disadvantage of the known method is that the bearing material in which the pattern of spiral grooves is applied will rebound when the die is removed as a result of the elastic deformation of the bearing material under the influence of the high coining forces of the die. According to DE-A-24 54 673, an additional lapping process is necessary to obtain the required accuracy of the shape of the bearing surface. Such an additional lapping process increases the total time which is necessary to manufacture the dynamic groove bearing. As a result, the manufacture of large numbers of groove bearings by the known method is laborious.

It is an object of the invention to provide a method of the kind mentioned in the opening paragraph for the manufacture of a dynamic groove bearing by which the disadvantages mentioned above are avoided, so that large numbers of groove bearings can be manufactured in a comparatively short period and in a comparatively simple manner, while a high degree of accuracy is achieved.

The invention is for this purpose characterized in that the said one of the bearing parts is first being provided with a ductile material and subsequently the bearing surface of the said one of the bearing parts is being shaped and simultaneously provided with the pattern of grooves through plastic deformation of said ductile material by means of said die and a press tool. The said one of the bearing parts is provided with a ductile material which is different from a material from which the bearing part is made and which is comparatively soft, so that the ductile material is plastically deformable under comparatively small compression forces and under a comparatively small elastic deformation. Owing to the good plastic deformability of the ductile material, the pattern of grooves is formed in an accurate manner. Since the required compression force is comparatively small, the rebound caused after pressing by the elastic deformation of the ductile material is extremely small.

A special embodiment of a method according to the invention, whereby the friction and the wear of the bearing surface manufactured by the method are small during stating or stopping of the dynamic groove bearing, is characterized in that the ductile material is an alloy of tin with lead, an alloy of tin with antimony, or an alloy of tin with lead and antimony.

A further embodiment of a method according to the invention is characterized in that the bearing surface with the pattern of grooves is given a fixed position relative to the corresponding bearing part by the plastic deformation of the ductile material. The fixation of the bearing surface with the pattern of grooves relative to the bearing part in this way means that no separate operations are required for fixing the bearing surface during the formation of the bearing surface.

A yet further embodiment of a method according to the invention is characterized in that the bearing surface with the pattern of grooves is integrated into a housing by the plastic deformation of the ductile material, the housing being fastened on a workbench of a press device which comprises a positioning device by means of which the die is positioned relative to the workbench and the housing during the formation of the bearing surface. Owing to the use of the press device with the workbench and the positioning device, large numbers of bearing parts integrated into housings, for example, suitable for assembly with further components, can be manufactured in a simple and accurate manner.

A particular embodiment of a method according to the invention is characterized in that the bearing surface with the pattern of grooves is formed in the external bearing part, while the die comprises a mandrel which fits in the external bearing part and by means of which the die is positioned relative to the external bearing part during the formation of the bearing surface. The use of the mandrel means that the die pattern of the die can be accurately positioned relative to the external bearing part, so that the bearing surface of the external bearing part according to the method can be provided in an accurate manner relative to the external bearing part.

A further embodiment of a method according to the invention is characterized in that the die pattern is present at an end of the mandrel, the end of the mandrel being applied in a compression chamber of the external bearing part which tapers and merges into an opening for the press tool, while subsequently the ductile material is pressed around the end of the mandrel in the compression chamber by means of the press tool. The use of the tapering compression chamber leads to the formation of a journal socket, while the bearing surface of the external bearing part with the pattern of grooves is at the same time fixed relative to the external bearing part.

A still further embodiment of a method according to the invention is characterized in that a mandrel with a clearing end is used. The use of a mandrel with a clearing end such as, for example, an end in the shape of a sphere segment or a cone, leads to the manufacture of dynamic groove bearings with a comparatively compact construction in which the bearing parts experience a combined radial and axial bearing force.

A special embodiment of a method according to the invention is characterized in that the ductile material is provided between an upper surface of the external bearing part, which upper surface extends perpendicular to a centreline of the external bearing part, and a pressure surface of the die, on which pressure surface the die pattern is present and which, extends perpendicular to a centreline of the mandrel, and is subsequently pressed onto the upper surface by the press tool and the die, whereby the plastic deformation of the ductile material takes place in radial direction and the ductile material is fixed in an annular groove of a collar provided on the upper surface. The use of the said pressure surface leads to a plane dynamic groove bearing, the bearing surface of the external bearing part formed by the method being perpendicular to the centreline of the external bearing part, so that an accurate axial bearing action and a high revolving accuracy of the internal bearing part relative to the external bearing part are achieved.

A particular embodiment of a method according to the invention is characterized in that the bearing surface with the pattern of grooves is formed in a ring-shaped disc, which is made of the ductile material, the ring-shaped disc being provided first around the internal bearing part between a pressure surface of a first die, on which pressure surface a first die pattern is present and which extends perpendicular to a centreline of the internal bearing part, and a pressure surface of a second die, on which pressure surface a second die pattern is present and which extends perpendicular to the centreline of the internal bearing part, while the ring-shaped disc is subsequently pressed by the press tool between the pressure surfaces of the first die and the second die, whereby the plastic deformation of the ductile material takes place in radial direction with respect to the centreline and the ring-shaped disc is fixed in an annular groove provided in the internal bearing part. By the use of said first die and said second die, a ring-shaped bearing surface with a pattern of grooves is formed on both sides of said ring-shaped disc, which disc is simultaneously fixed around the internal bearing part. In this way, a plane axial dynamic bearing is formed providing a bearing force in two opposite axial directions.

A further embodiment of a method according to the invention is characterized in that the die is positioned in axial direction relative to the corresponding bearing part with the aid of a sensor during the formation of the bearing surface, which sensor measures an axial position of the die relative to the relevant bearing part. The use of the said sensor achieves that the bearing surface is provided in an accurate, predetermined axial position relative to the bearing part by the die.

In accordance with the invention, a method of manufacturing a data-storage unit of the kind mentioned in the opening paragraphs is characterized in that the patterns of grooves are provided in the external bearing parts and the external bearing parts are integrated into the respective main walls by a method of manufacturing a dynamic groove bearing according to the invention. The properties of the method of manufacturing a dynamic groove bearing according to the invention become particularly apparent when the method is used for integrating said external bearing parts into said main walls. The integration of the external bearing parts of the groove bearings into the two main walls in the manner indicated above provides an effective, compact and convenient housing for the data-storage unit.

In accordance with the invention, a method of manufacturing a rotatable scanning unit of the kind mentioned in the opening paragraphs is characterized in that the dynamic groove bearing is manufactured by a method of manufacturing a dynamic groove bearing according to the invention. The properties of the method of manufacturing a dynamic groove bearing according to the invention become particularly apparent when used in said method of manufacturing a rotatable scanning unit.

A particular embodiment of a method of manufacturing a rotatable scanning unit according to the invention is characterized in that the magnetic-tape guide is being used as a reference for the axial positioning of the die pattern of the die relative to the external bearing part. Since the magnetic-tape guide is used as a reference in the axial positioning of the die in the external bearing part, the bearing surface of the base drum is provided in an accurate axial position relative to the magnetic-tape guide, so that the scanning drum is accurately positioned in axial direction relative to the magnetic-tape guide by means of the dynamic groove bearing.

In accordance with the invention, a method of manufacturing a magnetic-tape device of the kind mentioned in the opening paragraphs is characterized in that the scanning unit is manufactured by a method of manufacturing a rotatable scanning unit according to the invention. The properties of the method of manufacturing a rotatable scanning unit according to the invention become particularly apparent when used in said method of manufacturing a magnetic-tape device.

The invention is explained in more detail below with reference to the drawing in which
Fig. 1a diagrammatically shows a first embodiment of a device for carrying out a method according to the invention for the manufacture of a dynamic groove bearing,
Fig. 1b diagrammatically shows a second embodiment of a device for carrying out a method according to the invention for the manufacture of a dynamic groove bearing,
Fig. 2 diagrammatically shows a third embodiment of a device for carrying out a method according to the invention for the manufacture of a dynamic groove bearing,
Fig. 3a shows a dynamic groove bearing manufactured by means of the device of Fig. 1a,
Fig. 3b shows a dynamic groove bearing manufactured by means of the device of Fig. 1b,
Fig. 4a shows a dynamic groove bearing manufactured by means of the device of Fig. 2,
Fig. 4b shows a pattern of grooves of a dynamic groove bearing according to Fig. 4a,
Fig. 5a shows in cross-section a rotatable scanning unit for a magnetic tape provided with a dynamic groove bearing according to Fig. 4a,
Fig. 5b diagrammatically shows a device for carrying out a method according to the invention for the manufacture of the scanning unit of Fig. 5a,
Fig. 5c diagrammatically shows a magnetic-tape device which is provided with the scanning device of Fig. 5a,
Fig. 6a diagrammatically shows a press device for carrying out a method according to the invention for the manufacture of a bearing part integrated in a housing,
Fig. 6b shows a housing with an integrated bearing part manufactured by means of the press device of Fig. 6a,
Fig. 6c diagrammatically shows a data storage unit provided with a dynamic groove bearing manufactured by means of the press device of Fig. 6a,
Fig. 7 diagrammatically shows a device for carrying out a method according to the invention for the manufacture of an internal bearing part,
Fig. 8a diagrammatically shows a fourth embodiment of a device for carrying out a method according to the invention for the manufacture of a dynamic groove bearing, and
Fig. 8b shows a dynamic groove bearing manufactured by means of the device of Fig. 8a.

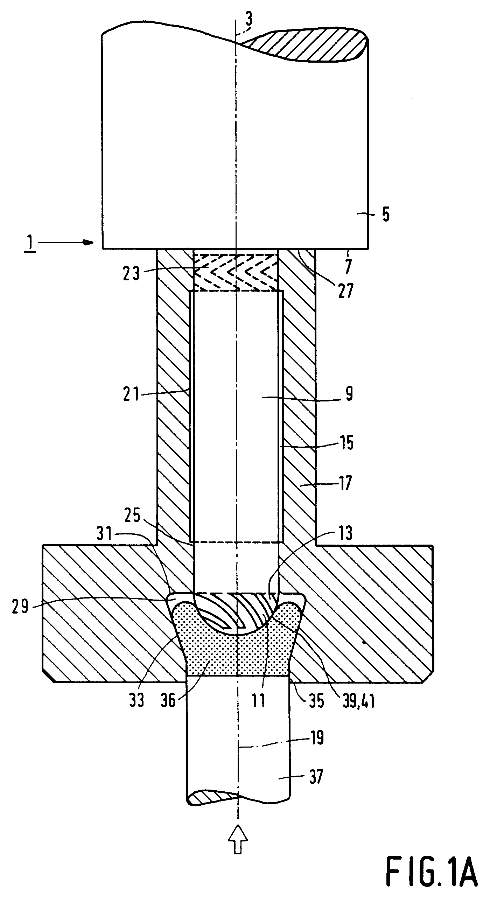

The first embodiment of a device for carrying out a method according to the invention for the manufacture of a dynamic groove bearing as shown in Fig. 1a comprises an elongate, hard-metal die 1 with a centreline 3 and a base 5 which is provided with a base surface 7 extending perpendicular to the centreline 3. The die 1 further comprises a circular-cylindrical mandrel 9 which is perpendicular to the base surface 7. The mandrel 9 is provided with an end 11 in the form of a sphere segment on which a die pattern 13 is provided which corresponds to a pattern of grooves to be provided by means of the die 1.

The mandrel 9 of the die 1 is provided in a substantially circular-cylindrical chamber 15 of an external bearing part 17 having a centreline 19. The chamber 15 is provided with an inner wall 21 with a first, circular-cylindrical wall portion 23 and a second, circular-cylindrical wall portion 25. The circular-cylindrical mandrel 9 fits without clearance between the wall portions 23 and 25, which have equal diameters, the centreline 3 of the die 1 and the centreline 19 of the chamber 15 coinciding. The base surface 7 of the die 1 rests on an upper surface 27 of the external bearing part 17 provided perpendicularly to the centreline 19 of the chamber 15.

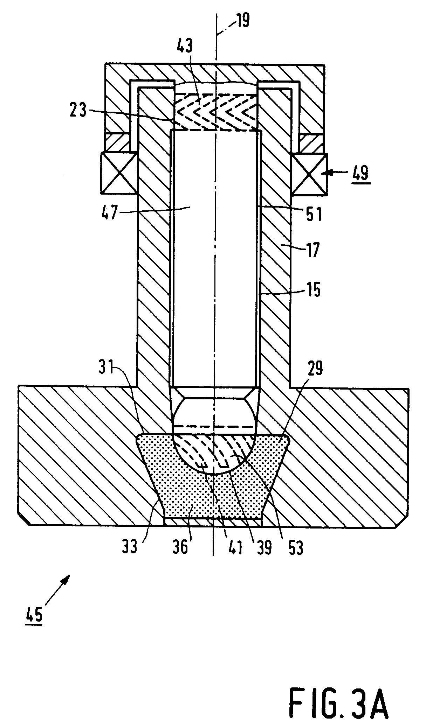

As is further depicted in Fig. 1a, the end 11 of the mandrel 9 with the die pattern 13 is present in a tapering compression chamber 29 of the external bearing part 17. The compression chamber 29, whose centreline coincides with the centreline 19, has an upper wall 31 extending transverse to the centreline 19 and a tapering side wall 33 which narrows conically from the upper wall 31 and ends in a round opening 35. A so-called ductile material 36 is provided in the compression chamber 29, for example, an alloy of tin with lead, an alloy of tin with antimony (white metal), or an alloy of tin with lead and antimony (Babbitt's metal). In addition to the said elements, these alloys may also comprise copper. Such a material is plastically deformable under comparatively small compression forces, while the elastic deformation of the material is comparatively small. The ductile material 36 is pressed around the end 11 of the mandrel 9 by a press tool 37 which fits without clearance in the opening 35 of the compression chamber 29. As a result, the external bearing part 17 is given a bearing surface 39 in the form of a sphere segment and having a pattern of grooves 41 corresponding to the die pattern 13 through plastic deformation of the ductile material 36. Owing to the good plastic deformability of the ductile material 36, the pattern of grooves 41, which has a groove depth of approximately ten micrometers, is formed in an accurate manner. Since the required compression force is comparatively small and the bearing surface 39 is comparatively large, the rebound caused after pressing by the elastic deformation of the ductile material 36 is extremely small. As is shown in Figs. 1a and 3a, the ductile material 36 is fixed relative to the external bearing part 17 between the upper wall 31 and the tapering side wall 33 of the compression chamber 29 by the plastic deformation, so that the bearing surface 39 with the pattern of grooves 41 is also brought into a fixed, accurate position in relation to the external bearing part 17.

Since the ductile material 36 is comparatively soft, no appreciable damage is caused to the die pattern 13 during pressing of the ductile material 36 around the end 11 of the mandrel 9. The die 1 accordingly can be repeatedly used in the production of large numbers of bearing parts 17. Compared with alternative techniques, whereby the pattern of grooves is provided, for example, in a machining operation or a comparatively laborious etching process, the repeated use of the die 1 leads to a considerable simplification and time saving in the manufacture of large numbers of bearing parts 17.

Fig. 3a shows an external bearing part 17 manufactured by the device shown in Fig. 1a, in which the first circular-cylindrical wall portion 23 of the chamber 15 is provided with a further pattern of grooves 43. The external bearing part 17 forms a dynamic groove bearing 45 in conjunction with an internal bearing part 47 which is rotatable in the chamber 15 for this purpose by means of a diagrammatically indicated drive unit 49. The internal bearing part 47 to this end further comprises a smooth, circular-cylindrical outer wall 51 for cooperating with the further pattern of grooves 43 and a smooth ball 53 for cooperating with the pattern of grooves 41 of the bearing surface 39 formed from the ductile material 36 which thus constitutes a journal socket for the internal bearing part 47. Upon rotation of the internal bearing part 47, the bearing parts 17 and 47 of the operating dynamic groove bearing 45 can absorb an axial and a radial bearing force through cooperation of the pattern of grooves 41 and the ball 53, and a radial bearing force only through cooperation of the further pattern of grooves 43 and the outer wall 51. The bearing parts 17 and 47 under normal circumstances come into mutual contact exclusively during staring and stopping of the said rotation. Any wear of the bearing surface 39 occurring during this remains limited through the use of the said tin alloys.

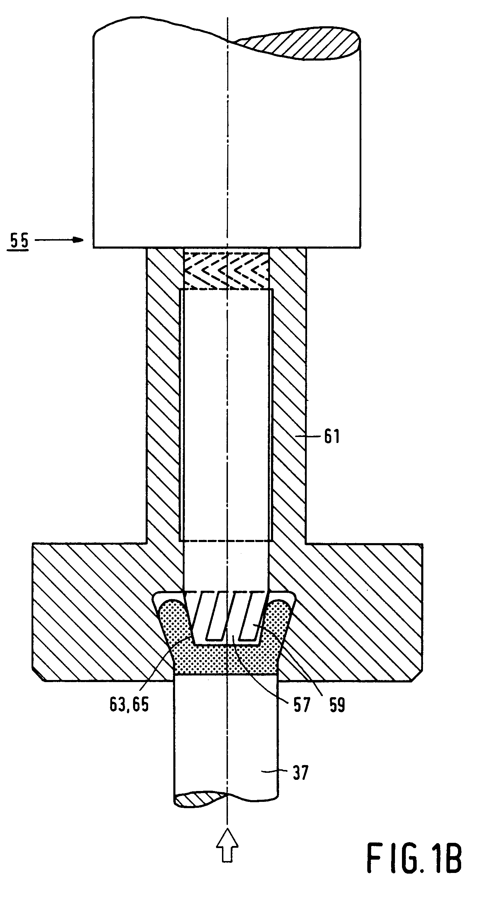

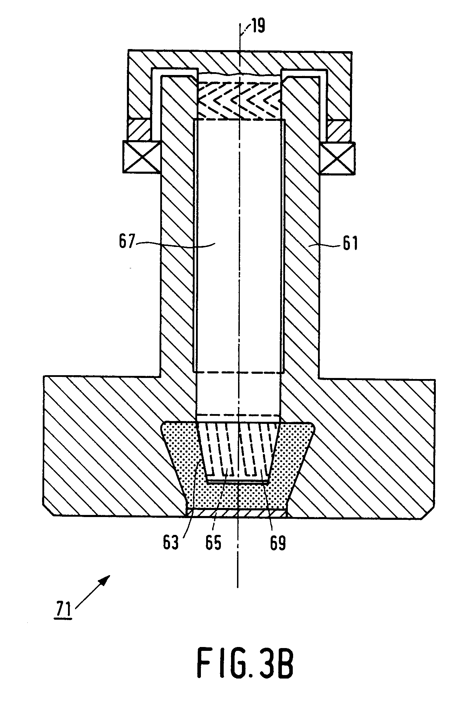

In the second embodiment of a device for carrying out a method according to the invention for the manufacture of a dynamic groove bearing, shown in Fig. 1b, a die 55 similar to the die 1 shown in Fig. 1a is used, but here provided with a conical end 57 with a die pattern 59. A conical bearing surface 63 is provided in an external bearing part 61 by the use of the die 55, with a pattern of grooves 65 corresponding to the die pattern 59. As is shown in Fig. 3b, the bearing surface 63 forms a conical journal socket for an internal bearing part 67 which is provided with a smooth cone 69 for cooperating with the bearing surface 63 and which forms a dynamic groove bearing 71 in conjunction with the external bearing part 61. The bearing parts 61 and 67 can absorb a bearing force having a radial and an axial component upon rotation of the internal bearing part 67 in the external bearing part 61 through cooperation of the groove pattern 65 and the cone 69.

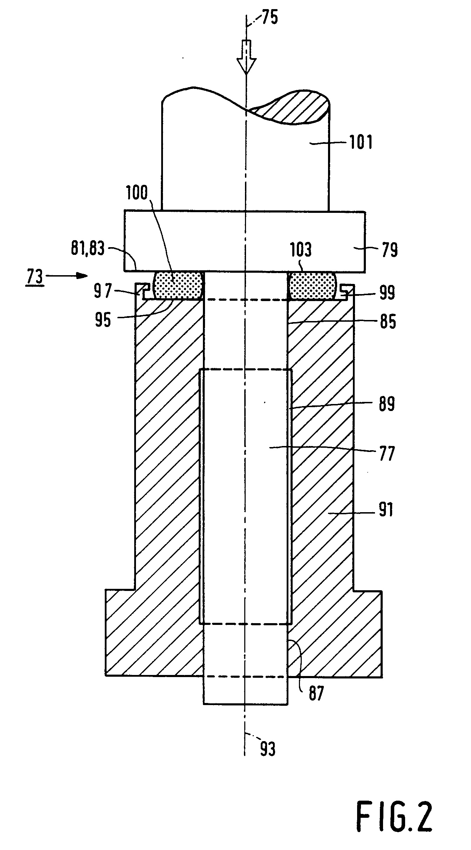

In the third embodiment of a device for carrying out a method according to the invention for the manufacture of a dynamic groove bearing, shown in Fig. 2, a die 73 is used with a centreline 75, a circular-cylindrical mandrel 77 and a base 79 with a pressure surface 81 extending perpendicular to the centreline 75, on which pressure surface a die pattern 83 not visible in the Figure is provided. The mandrel 77 fits without clearance between two circular-cylindrical wall portions 85 and 87 of a substantially circular-cylindrical chamber 89 of an external bearing part 91 with centreline 93 to be manufactured by means of the die 73, so that the pressure surface 81 of the die 73 is perpendicular to the centreline 93. The external bearing part 91 further comprises an annular upper surface 95 extending perpendicular to the centreline 93 and surrounded by an annular collar 97 with an inside which is provided with an annular groove 99.

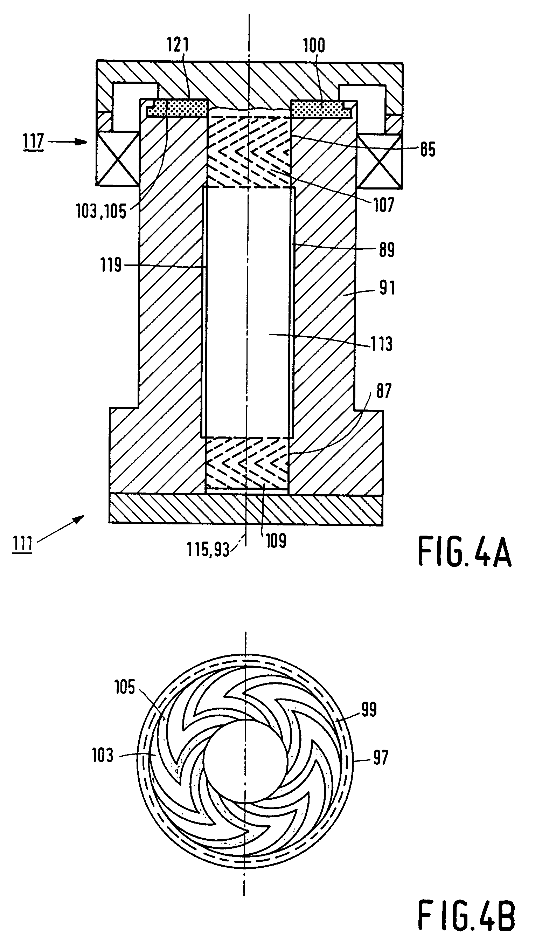

In the device shown in Fig. 2, a ductile material 100 is provided between the upper surface 95 of the external bearing part 91 and the pressure surface 81 of the die 73. Then a force is exerted on the base 79 of the die 73 by a press tool 101 so that a plane, annular bearing surface 103 is formed on the upper surface 95 through plastic deformation of the ductile material 100, with a pattern of grooves 105 not shown in Fig. 4b and corresponding to the die pattern 83. The plastic deformation of the ductile material 100 takes place mainly in radial direction, so that the ductile material 100 penetrates to inside the annular groove 99, and the bearing surface 103 is fixed relative to the external bearing part 91 in the annular groove 99, as is shown in Fig. 4a. Since the mandrel 77 of the die 73 fits the chamber 89 of the external bearing part 91 without clearance, the bearing surface 103 provided by the die 73 is perpendicular to the centreline 93 of the external bearing part 91, whereby the bearing surface 103 is accurately positioned relative to the external bearing part 91.

The external bearing part 91 manufactured by the die 73 is shown in Fig. 4a. The two circular-cylindrical wall portions 85 and 87 of the chamber 89 are provided with further patterns of grooves 107 and 109. The external bearing part 91 forms a dynamic groove bearing 111 in conjunction with an internal bearing part 113 with a centreline 115, which is for this purpose rotatable in the chamber 89 of the external bearing part 91 by means of a diagrammatically indicated drive unit 117 and which is provided with a smooth, circular-cylindrical outer wall 119 and a smooth bearing surface 121 extending perpendicular to the centreline 115 for cooperating with the further groove patterns 107, 109 and the groove pattern 105 of the bearing surface 103, respectively. Upon rotation of the internal bearing part 113, the bearing parts 91 and 113 can absorb an axial bearing force through the cooperation of the groove pattern 105 and the bearing surface 121, and a radial bearing force through the cooperation of the further groove patterns 107, 109 and the outer wall 119.

It is noted that the area size of the bearing surface 103 of the dynamic groove bearing 111 may be chosen independently of the diameter of the wall portions 85 and 87 in the design phase, so that the groove bearing 111 may be specially designed for absorbing comparatively large axial bearing forces. The dynamic groove bearings 45 and 71 shown in Fig. 3a and 3b have a comparatively compact construction, so that the groove bearings 45 and 71 are particularly suitable for use in devices of comparatively small dimensions in which high requirements are imposed on the accuracy and low wear of the bearings to be used therein. It is further noted that a liquid lubricant may be used in the grooves of the groove bearings 45, 71 and 111. If a liquid lubricant cannot be used, for example, because the pollution caused thereby is inadmissible, the groove bearings 45, 71 and 111 may alternatively be used without liquid lubricant, the bearing forces being absorbed by the air or gas pressure built up in the grooves.

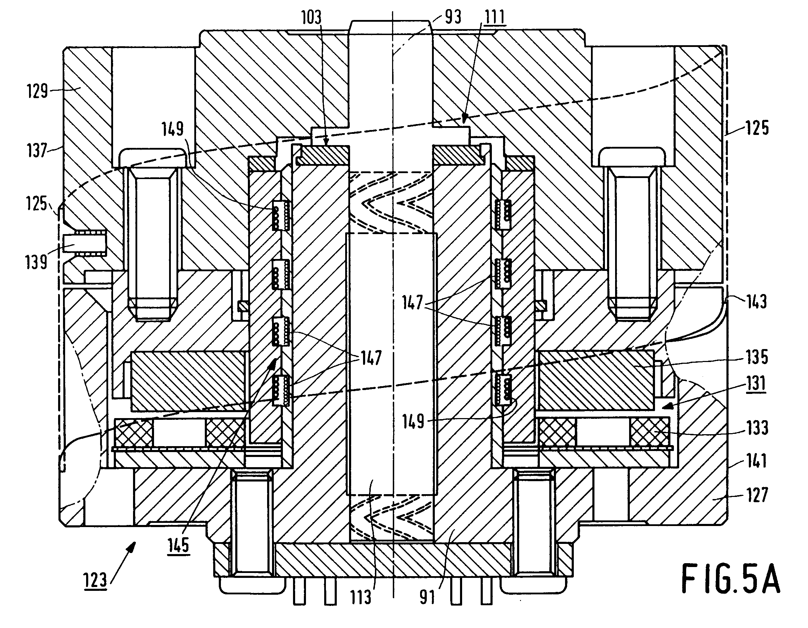

The dynamic groove bearing 111 shown in Fig. 5a is used in a rotatable scanning unit 123 shown in cross-section in Fig. 5a, by means of which data are written onto or read from a magnetic tape 125. The magnetic tape 125 is indicated with a broken line in Fig. 5a. The scanning unit 123 comprises a base drum 127 and a scanning drum 129 of substantially equal diameters. The scanning drum 129 has its bearings relative to the base drum 127 in the dynamic groove bearing 111 and is rotatable relative to the base drum 127 by means of an electric drive motor 131. The external bearing part 91 of the dynamic groove bearing 111 is fastened to the base drum 127, while the internal bearing part 113 is fastened to the scanning drum 129. The electric drive motor 131 comprises an annular electric stator coil 133 fastened to the base drum 127 and an annular permanent-magnetic rotor 135 fastened to the scanning drum 129. Two magnetic heads 139 for reading and writing of the magnetic tape 125 are present in an outer wall 137 of the scanning drum 129. Only one magnetic head 139 is visible in Fig. 5a. Furthermore, a helical magnetic tape guide 143 is provided on an outer wall 141 of the base drum 127. When the magnetic tape 125 is guided over the helical magnetic tape guide 143 of the base drum 127 by a mechanism not shown in Fig. 5a and the scanning drum 129 is rotated relative to the base drum 127 at a comparatively high speed, data in the form of sloping tracks on the magnetic tape 125 may be written onto or read from the magnetic tape 125 by the magnetic heads 139. The scanning unit 123 further comprises an inductive data transmitter 145 with a number of primary electric coils 147 which are fastened to the base drum 127 and a number of secondary electric coils 149 which are fastened to the scanning drum 129, by means of which electrical signals coming from the magnetic heads 139 can be transmitted from the rotatable scanning drum 129 to the base drum 127 and *vice versa*.

Since the magnetic tape 125 should be accurately guided along the scanning drum 129, high requirements are imposed on the accuracy of the dynamic groove bearing 111, in particular on the axial position and revolving accuracy of the internal bearing part 113 in relation to the external bearing part 91, and on the perpendicularity of the bearing surface 103 relative to the centreline 93. The dynamic groove bearing 111 accordingly forms a component which is very important for a satisfactory functioning of the scanning unit 123. When the groove bearing 111 is manufactured by the method described above, the requirements regarding the revolving accuracy and perpendicularity can be satisfied in a comparatively simple manner, so that a considerable simplification is offered in mass manufacture of scanning units 123 for use in magnetic tape devices such as, for example, video cassette recorders or video cameras.

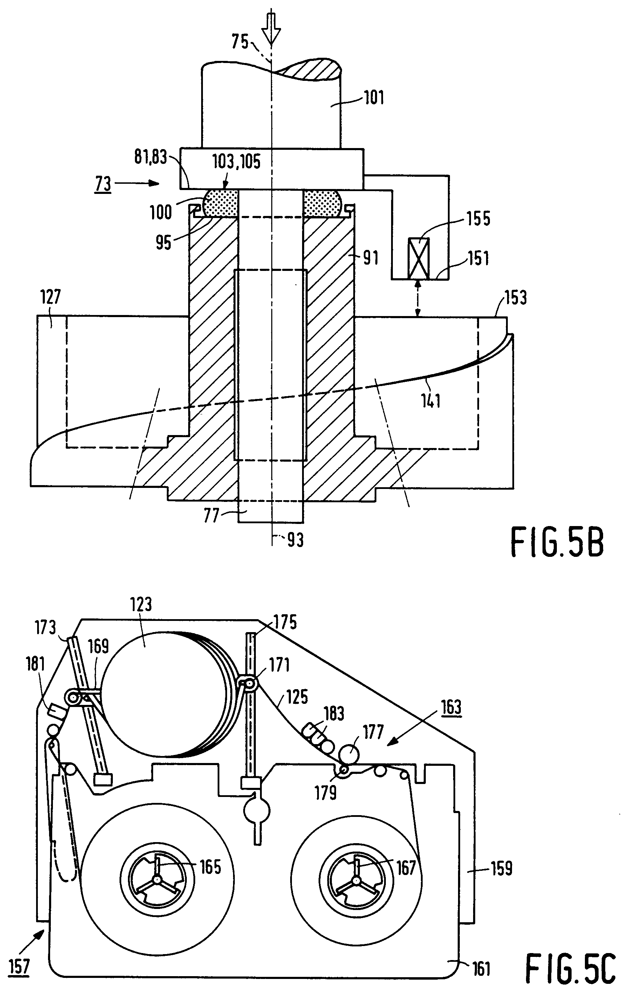

As is shown in Fig. 5b, an accurate axial position of the internal bearing part 113 is achieved in that the die 73 discussed above with reference to Fig. 2 is used in the manufacture of the dynamic groove bearing 111 applied for the scanning unit 123. The die 73 is for this purpose further provided with a reference surface 151 which is perpendicular to the centreline 75 of the die 73 and which is in an accurately defined position relative to the pressure surface 81 on which the die pattern 83 is provided. The die 73 is provided in the external bearing part 91 of the base drum 127, on which a further reference surface 153 is provided which is perpendicular to the centreline 93 of the external bearing part 91 and which is in an accurately defined position relative to the magnetic tape guide 141. The spacing between the two reference surfaces 151 and 153 is measurable by means of an optical sensor 155 of a usual kind which is known *per se* and which is indicated only diagrammatically in Fig. 5b. During pressing of the ductile material 100 on the upper surface 95 of the external bearing part 91, the spacing between the reference surfaces 151 and 153 is measured by the sensor 155, the movement of the press tool 101 being stopped when a previously determined reference spacing between the reference surfaces 151 and 153 has been achieved. In this manner the bearing surface 103 with the pattern of grooves 105 of the external bearing part 91 is provided in an accurate axial position relative to the magnetic tape guide 141, so that the scanning drum 129 with the magnetic heads 137 depicted in Fig. 5a has an accurate axial position relative to the magnetic tape guide 141.

The scanning unit 123 manufactured in accordance with Fig. 5b forms the heart of *e.g.* a magnetic tape device 157 diagrammatically pictured in Fig. 5c and provided with a space 159 for accommodating a magnetic tape cassette 161 and with a mechanism 163 for transporting and guiding of the magnetic tape 125 present in the magnetic tape cassette 161 along the scanning unit 123. The mechanism 163 comprises two reel drive shafts 165, 167 for cooperating with the magnetic tape cassette 161, and two tape lacing means 169, 171 which are displaceable along guides 173 and 175. The magnetic tape 125 is pulled from the magnetic tape cassette 161 by the tape lacing means 169, 171 upon staring of the magnetic tape device 157 and guided around the scanning unit 123. The mechanism 163 further comprises a pressure roller 177 which presses the magnetic tape against a tone shaft 179. The tone shaft 179, which is driven by a motor not shown in Fig. 5c, pulls the magnetic tape 125 along the scanning unit 123 with an accurately defined speed. Furthermore, the magnetic tape device 157 comprises two stationary magnetic heads 181 and 183 for erasing information and writing auxiliary information, respectively, on the magnetic tape 125.

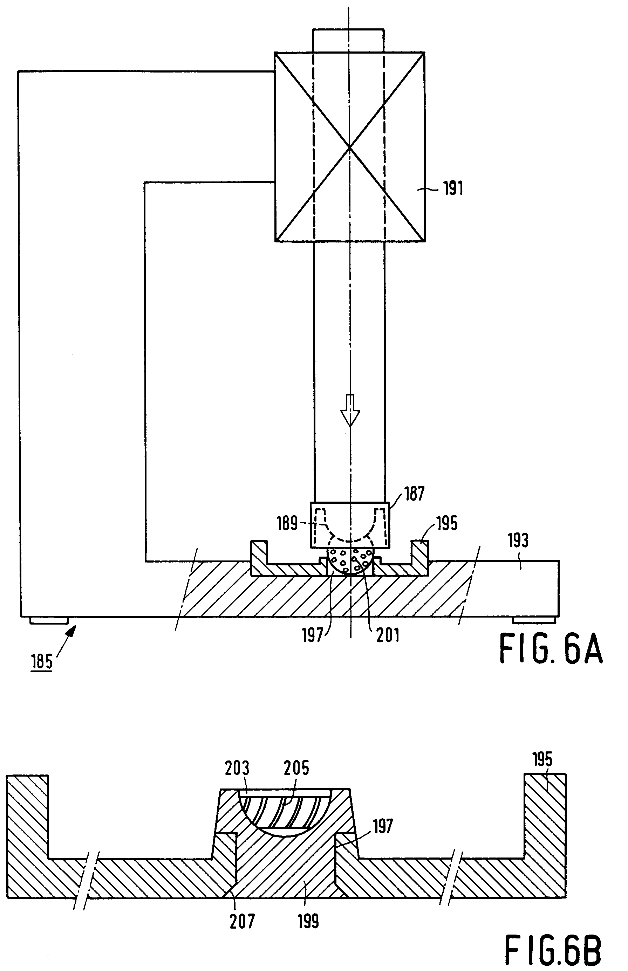

In the devices for carrying out a method according to the invention shown in Figs. 1a, 1b, 2 and 5b, a die 1, 55, 73 is used each time provided with a mandrel 9, 77 with which the die 1, 55, 73 is brought into an accurate position relative to the corresponding bearing part 17, 61, 91. Fig. 6a diagrammatically shows a press device 185 for carrying out a method according to the invention in which a die 187 provided with a die pattern 189 is positioned relative to a workbench 193 by means of a positioning device 191 which is depicted only diagrammatically. A workpiece is fastened on the workbench 193, for example, a metal or synthetic-resin housing 195 which, for example, is a component of a device or unit to be assembled afterwards. The housing 195 is provided with a recess 197 in which an external bearing part 199, shown in Fig. 6b, of a dynamic groove bearing to be subsequently assembled is formed by means of the press device 185. For this purpose, a ductile material 201 is provided between the recess 197 and the die 187, after which the die 187 is brought into an accurate position relative to the housing 195 by means of the positioning device 191. The bearing part 199, which has a bearing surface 203 in the form of a sphere segment and a pattern of grooves 205 corresponding to the die pattern 189, is formed thereby through plastic deformation of the ductile material 201. As is shown in Fig. 6b, the recess 197 is provided with a bevelled edge 207 into which the ductile material 201 penetrates during pressing, so that the bearing part 199 is fixed relative to the housing 195. Large numbers of housings 195 can be provided with integrated bearing parts 199 in a fast and simple manner by means of the press device 185.

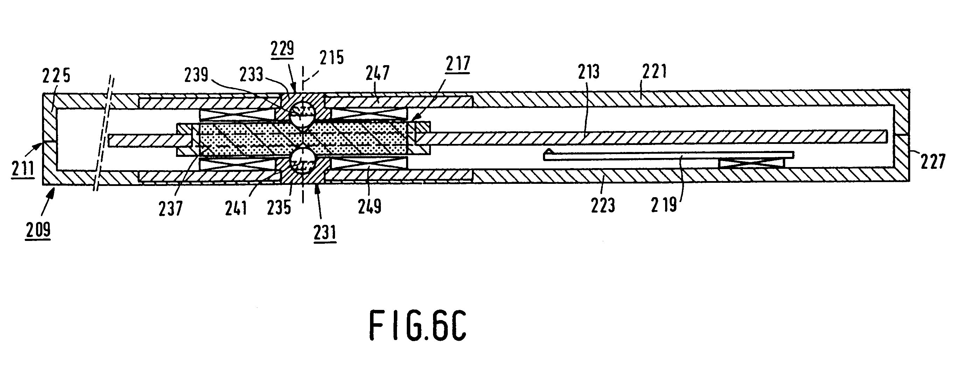

Fig. 6c shows a data storage unit 209 with a cassette-shaped housing 211 in which an information disc 213 is rotatable about an axis of rotation 215 by an electric drive unit 217. The information disc 213 is, for example, a so-called hard disk with a magnetic layer in which information can be stored or from which information can be read by a diagrammatically shown scanning unit 219. The cassette-shaped housing 211 comprises two main walls 221 and 223 extending parallel to and on either side of the information disc 213, and four side walls interconnecting the two main walls 221, 223. Only two side walls 225 and 227 are visible in Fig. 6c. The main walls 221 and 223 each belong to a housing 229, 231, which housings are provided with external bearing parts 233 and 235 of a ductile material in a manner shown in Fig. 6b. The information disc 213 is fastened to a magnetic rotor 237 of the drive unit 217. The rotor is provided with two smooth balls 239 and 241 which form two dynamic groove bearings together with the external bearing parts 233 and 235 which the information disc 213 is supported relative to the housing 211. The drive unit 217 is further provided with two electric coil systems 247 and 249 fastened to the main walls 221 and 223. The use of the dynamic groove bearings, whose external bearing parts 233 and 235 are integrated with the main walls 221 and 223 by a method according to the invention, provide the data storage unit 209 with a compact, light and convenient housing of minimum dimensions.

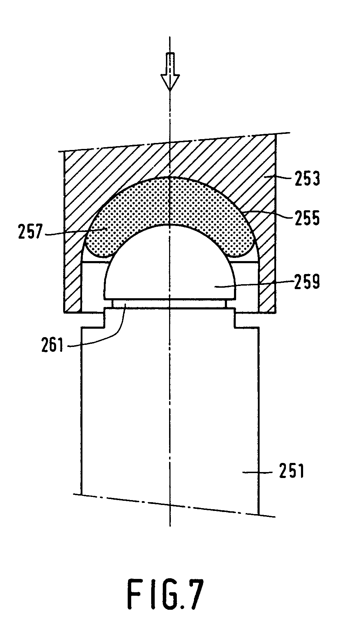

In the examples described above, a bearing surface with a pattern of grooves is formed each time in an external bearing part of a dynamic groove bearing. It is noted that the method according to the invention is alternatively capable of providing internal bearing parts with bearing surfaces comprising groove patterns formed from a ductile material. Fig. 7 diagrammatically shows a device by means of which an internal bearing part such as, for example, a shaft 251 is provided with a bearing surface. A die 253 is used here with a hollow die surface 255 on which a die pattern is provided corresponding to the pattern of grooves to be provided. The ductile material 257 is provided around a core 259 of the shaft 251, which is provided with an annular groove 261 for fixing the ductile material 257 relative to the shaft 251, by means of the die 253.

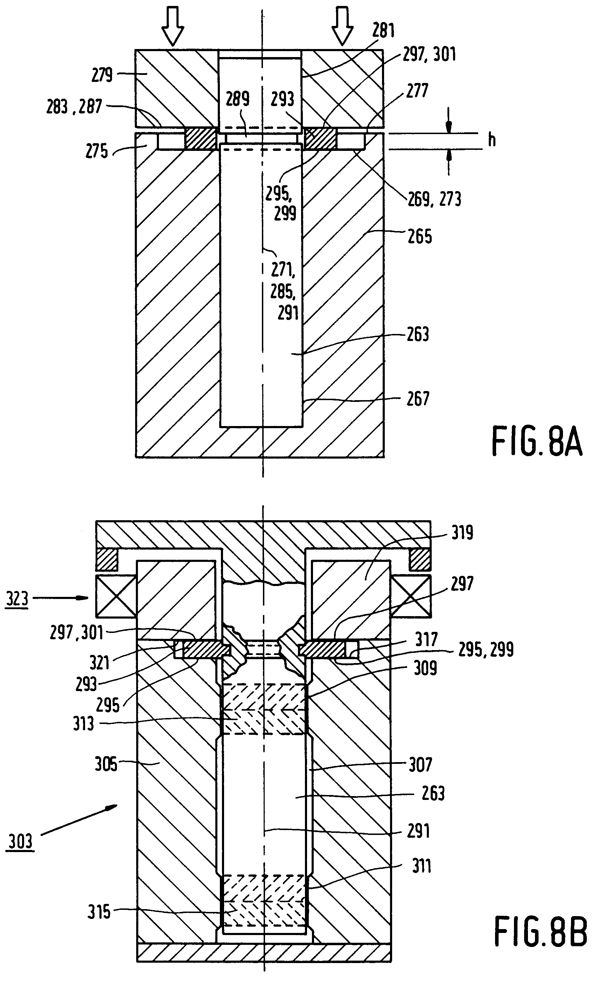

Figure 8a diagrammatically shows a fourth embodiment of a device for carrying out a method according to the invention. In this embodiment, just as in the embodiment of Figure 7, an internal bearing part comprising an elongate shaft 263 is provided with a bearing surface having groove patterns formed on a ductile material. The device of Figure 8a comprises a first die 265 having a circular cylindrical cavity 267, in which the shaft 263 fits substantially without clearance. The first die 265 further comprises a ring-shaped pressure surface 269 extending perpendicular to a centreline 271 of the first die 265, on which pressure surface 269 a die pattern 273 not visible in the Figure is present. Furthermore, the first die 265 comprises an annular collar 275 which concentrically surrounds the pressure surface 269. The collar 275 has a height h and comprises an upper surface 277 extending perpendicular to the centreline 271. The device of Figure 8a further comprises a second die 279 with a circular cylindrical cavity 281, in which the shaft 263 also fits without clearance. The second die 279 comprises a ring-shaped pressure surface 283 extending perpendicular to a centreline 285 of the second die 279, on which pressure surface 283 a die pattern 287 not visible in the Figure is present. According to the method of Figure 8a, the shaft 263 is provided with an annular groove 289 extending in a plane perpendicular to a centreline 291 of the shaft 263. A ring-shaped disc 293 made of a ductile material, such as aluminium or bronze, is provided around the shaft 263 near the annular groove 289. Subsequently, the shaft 263 in placed in the cavity 267 of the first die 265 and the second die 279 is placed around the shaft 263, so that the ring-shaped disc 293 is placed between the pressure surfaces 269, 283 of the first and second dies 265, 279 and so that the centrelines 271, 285, 291 of the first and second dies 265, 279 and of the shaft 263 coincide. Subsequently, a pressure force is exerted on the second die 279 by a press tool not shown in the Figure, under the influence of which the disc 293 is plastically deformed in a radial direction with respect to the centreline 291 and the disc 293 is fixed in the annular groove 289 of the shaft 263. Simultaneously, a pattern of grooves 295 corresponding to the die pattern 273 and a pattern of grooves 297 corresponding to the die pattern 287 are formed in a lower surface 299 and an upper surface 301 of the disc 293, respectively. The pressure force of the press tool is exerted until the pressure surface 283 of the second die 279 abuts against the upper surface 277 of the collar 275 of the first die 265. In this way, the lower and upper surfaces 299, 301 of the disc 293 extend perpendicular to the centreline 291 of the shaft 263 at a mutual distance which is equal to the height h of the disc 293.

Figure 8b shows a dynamic groove bearing 303 comprising the shaft 263 with the disc 293, manufactured by the method of Figure 8a, as an internal bearing part. The dynamic groove bearing 303 comprises a housing 305 having a cavity 307 with first and second circular cylindrical walls 309 and 311. The walls 309 and 311 cooperate with first and second groove patterns 313 and 315, respectively, which are provided on the shaft 263, so as to form a radial dynamic groove bearing for supporting the shaft 263 in a radial direction with respect to the housing 305. Furthermore, the housing 305 comprises a surface 317 extending perpendicular to the centreline 291 for cooperation with the pattern of grooves 295 in the lower surface 299 of the disc 293. The housing 305 is closed by means of a closing member 319 comprising a surface 321 extending perpendicular to the centreline 291 for cooperation with the pattern of grooves 297 in the upper surface 301 of the disc 293. Said surfaces 317, 321 and the patterns of grooves 295, 297 constitute an axial dynamic groove bearing for supporting the shaft 263 in an axial direction with respect to the housing 305. The shaft 263 is rotatable in the housing 305 by means of a drive unit 323, which is indicated diagrammatically in Figure 8b.

In the examples described above, furthermore, the ductile material is fixed relative to the relevant bearing part each time by plastic deformation. It is noted that the bearing surface formed from the ductile material may also be fixed in an alternative manner relative to the bearing part, for example, by means of a lockwasher which is provided around the bearing surface after pressing.

As was described above, the bearing surfaces with the patterns of grooves are formed, for example, from white metal or Babbitt's metal. It is noted that, instead of the said alloys, alternative ductile materials may be used such as, for example, alloys of copper with tin or alloys of copper with tin, zinc and lead.

The preceding text describes the manufacture of a dynamic groove bearing 45 with a bearing surface 39 in the form of a sphere segment with which an axial and a radial bearing force can be absorbed, a dynamic groove bearing 71 with a conical bearing surface 63 with which also an axial and a radial bearing force can be absorbed, and a dynamic groove bearing 111 with a plane bearing surface 103 with which exclusively an axial bearing force can be absorbed. It is noted that bearing surfaces of a different shape may also be manufactured by the method described above, the shape of the bearing surface being such in all cases that the die is clearing after the formation of the bearing surface. A desired ratio between the radial and axial bearing forces to be absorbed may be achieved in a simple manner through a suitable design of the bearing surface and the groove pattern, while the bearing surfaces to be formed according to the method must in any case be capable of absorbing an axial bearing force.

The above describes the use of the dynamic groove bearing manufactured by the method in a rotatable scanning unit for a magnetic tape device and in a data storage unit with a magnetic hard disk. It is noted that the dynamic groove bearing manufactured by the method may also be used in other devices such as, for example, in so-called polygon scanners which comprise a polygonal mirror supported with rotation possibility by a dynamic groove bearing, or in miniaturised electric motors with a rotor supported by a dynamic groove bearing. In all these applications, the use of the method according to the invention leads to a major simplification and time saving in the production of large numbers of such devices or motors.

## Claims

1. A method of manufacturing a dynamic groove bearing (45, 71, 111) having an internal bearing part (47, 67, 113) which is arranged coaxially relative to an external bearing part (17, 61, 91), which bearing parts (17, 47; 61, 67; 91, 113) are rotatable relative to one another and experience at least an axial bearing force during this, by which method the bearing parts (17, 47; 61, 67; 91, 113) are provided with co-operating bearing surfaces (53, 39; 69, 63; 121, 103), the bearing surface (39, 63, 103) of one of the bearing parts (17, 61, 91) being shaped and simultaneously provided with a pattern of grooves (41, 65, 105) by means of a die (1, 55, 73) which has a die pattern (13, 59, 83) corresponding to the pattern of grooves (41, 65, 105), characterized in that the said one of the bearing parts (17, 61, 91) is first being provided with a ductile material (36, 100) and subsequently the bearing surface (39, 63, 103) of the said one of the bearing parts (17, 61, 91) is being shaped and simultaneously provided with the pattern of grooves (41, 65, 105) through plastic deformation of said ductile material (36, 100) by means of said die (1, 55, 73) and a press tool (37, 101).

2. A method as claimed in Claim 1, characterized in that the ductile material (36, 100) is an alloy of tin with lead, an alloy of tin with antimony, or an alloy of tin with lead and antimony.

3. A method as claimed in Claim 1 or 2, characterized in that the bearing surface (39, 63, 103) with the pattern of grooves (41, 65, 105) is given a fixed position relative to the said one of the bearing parts (17, 61, 91) by the plastic deformation of the ductile material (36, 100).

4. A method as claimed in Claim 1, 2 or 3, characterized in that the bearing surface (203) with the pattern of grooves (205) is integrated into a housing (195) by the plastic deformation of the ductile material (201), the housing (195) being fastened on a workbench (193) of a press device (185) which comprises a positioning device (191) by means of which the die (187) is positioned relative to the workbench (193) and the housing (195) during the formation of the bearing surface (203).

5. A method as claimed in Claim 1, 2 or 3, characterized in that the bearing surface (39, 63, 103) with the pattern of grooves (41, 65, 105) is formed in the external bearing part (17, 61, 91), while the die (1, 55, 73) comprises a mandrel (9, 77) which fits in the external bearing part (17, 61, 91) and by means of which the die (1, 55, 73) is positioned relative to the external bearing part (17, 61, 91) during the formation of the bearing surface (39, 63, 103).

6. A method as claimed in Claim 5, characterized in that the die pattern (13, 59) is present at an end (11, 57) of the mandrel (9), the end (11, 57) of the mandrel (9) being applied in a compression chamber (29) of the external bearing part (17, 61) which tapers and merges into an opening (35) for the press tool (37), while subsequently the ductile material (36) is pressed around the end (11, 57) of the mandrel (9) in the compression chamber (29) by means of the press tool (37).

7. A method as claimed in Claim 6, characterized in that a mandrel (9) with a clearing end (11, 57) is used.

8. A method as claimed in Claim 5, characterized in that the ductile material (100) is provided between an upper surface (95) of the external bearing part (91), which upper surface (95) extends perpendicular to a centreline (93) of the external bearing part (91), and a pressure surface (81) of the die (73), on which pressure surface (81) the die pattern (83) is present and which extends perpendicular to a centreline (75) of the mandrel (77), and is subsequently pressed onto the upper surface (95) by the press tool (101) and the die (73), whereby the plastic deformation of the ductile material (100) takes place in radial direction and the ductile material (100) is fixed in an annular groove (99) of a collar (97) provided on the upper surface (95).

9. A method as claimed in Claim 3, characterized in that the bearing surface (299, 301) with the pattern of grooves (295, 297) is formed in a ring-shaped disc (293) which is made of the ductile material, the ring-shaped disc (293) being provided first around the internal bearing part (263) between a pressure surface (269) of a first die (265), on which pressure surface (269) a first die pattern (273) is present and which extends perpendicular to a centreline (291) of the internal bearing part (263), and a pressure surface (283) of a second die (279), on which pressure surface (283) a second die pattern (287) is present and which extends perpendicular to the centreline (291) of the internal bearing part (263), while the ring-shaped disc (293) is subsequently pressed by the press tool between the pressure surfaces (269, 283) of the first die (265) and the second die (279), whereby the plastic deformation of the ductile material takes place in radial direction with respect to the centreline (291) and the ring-shaped disc (293) is fixed in an annular groove (289) provided in the internal bearing part (263).

10. A method as claimed in any one of the preceding Claims, characterized in that the die (73) is positioned in axial direction relative to the said one of the bearing parts (91) with the aid of a sensor (155) during the formation of the bearing surface (103), which sensor (155) measures an axial position of the die (73) relative to the said one of the bearing parts (91).

11. A method of manufacturing a data-storage unit (209) comprising an information disc (213) and a scanning unit (219) for co-operating with the information disc (213), which disc (213) is rotatably supported in a cassette-shaped housing (211) by means of two dynamic groove bearings (233, 239; 235, 241), the housing (211) comprising two main walls (221, 223) extending parallel to and on either side of the information disc (213), according to which method the external bearing parts (233, 235) of the dynamic groove bearings (233, 239; 235, 241) are integrated into said main walls (221, 223), respectively, and are each provided with a pattern of grooves, characterized in that the patterns of grooves are provided in the external bearing parts (233, 235) and the external bearing parts (233, 235) are integrated into the respective main walls (221, 223) by a method as claimed in Claim 4.

12. A method of manufacturing a rotatable scanning unit (123) with a base drum (127) which has an outer wall (141) with a helical magnetic-tape guide (143) and a scanning drum (129) which is rotatable relative to the base drum (127) and which has at least one magnetic head (139), according to which method the scanning unit (123) is provided with a dynamic groove bearing (111), the base drum (127) being provided with an external bearing part (91) of the dynamic groove bearing (111), characterized in that the dynamic groove bearing (111) is manufactured by a method as claimed in Claim 5, 6, 7 or 8.

13. A method of manufacturing a rotatable scanning unit (123) as claimed in Claim 12, characterized in that the magnetic-tape guide (143) is being used as a reference for the axial positioning of the die pattern (83) of the die (73) relative to the external bearing part (91).

14. A method of manufacturing a magnetic-tape device (157), according to which method the magnetic-tape device is provided with a rotatable scanning unit (123), a space (159) for the accommodation of a magnetic-tape cassette (161), and a mechanism (163) for transporting and guiding a magnetic tape (125) along the scanning unit (123), characterized in that the scanning unit (123) is manufactured by a method as claimed in Claim 12 or 13.

## Patentansprüche

1. Verfahren zur Herstellung eines dynamischen Rillenlagers (45, 71, 111) mit einem gegenüber einem Außenlagerteil (17, 61, 91) koaxial angeordneten Innenlagerteil (47, 67, 113), wobei die Lagerteile (17, 47; 61, 67; 91, 113) gegenüber einander drehbar sind und dabei mindestens eine axiale Lagerkraft erfahren, wobei nach diesem Verfahren die Lagerteile (17, 47; 61, 67; 91, 113) mit zusammenarbeitenden Lagerflächen (53, 39; 69, 63; 121, 103) versehen werden, wobei die Lagerfläche (39, 63, 103) eines der Lagerteile (17, 61, 91) mit Hilfe eines Stempels (1, 55, 73) mit einem dem Muster des Stempels (13, 59, 83) entsprechenden Rillenmuster 41, 65, 105) versehen wird, dadurch gekennzeichnet, daß der genannte Lagerteil (17, 61, 91) zunächst mit einem duktilen Material (36, 100) versehen wird und daß danach die Lagerfläche (39, 63, 103) des genannten Lagerteils (17, 61, 91) geformt und gleichzeitig durch plastische Verformung des genannten duktilen Materials (36, 100) mit Hilfe des genannten Stempels (1, 55, 73) und eines Preßwerkzeugs (37, 101) mit einem Rillenmuster (41, 65, 105) versehen wird.

2. Verfahren nach Anspruch 1, dadurch gekennzeichnet, daß das duktile Material (36, 100) eine Legierung aus Zinn mit Blei, eine Legierung aus Zinn und Antimon oder eine Legierung aus Zinn, Blei und Antimon ist.

3. Verfahren nach Anspruch 1 oder 2, dadurch gekennzeichnet, daß die Lagerfläche (39, 63, 103) mit dem Rillenmuster (41, 65, 105) durch plastische Verformung des duktilen Materials (36, 100) gegenüber dem betreffenden Lagerteil fixiert wird.

4. Verfahren nach Anspruch 1, 2 oder 3, dadurch gekennzeichnet, daß die Lagerfläche (203) mit dem Rillenmuster (205) durch die plastische Verformung des duktilen Materials (201) in einem Gehäuse (195) integriert wird, wobei das Gehäuse (195) auf einem Arbeitstisch (193) einer Preßeinrichtung (185) befestigt wird, die eine Positionierungseinrichtung (191) aufweist, mit deren Hilfe der Stempel (187) bei der Bildung der Lagerfläche (203) gegenüber dem Arbeitstisch (193) und dem Gehäuse (195) positioniert wird.

5. Verfahren nach Anspruch 1, 2 oder 3, dadurch gekennzeichnet, daß die Lagerfläche (39, 63, 103) mit dem Rillenmuster (41, 65, 105) in dem Außenlagerteil (17, 61, 91) gebildet wird, wobei der Stempel (1, 55, 73) einen in den Außenlagerteil(17, 61, 91) passenden Dorn (9, 77) aufweist, mit dessen Hilfe der Stempel (1, 55, 73) bei der Bildung der Lagerfläche (39, 63, 103) gegenüber dem Außenlagerteil (17, 61, 91) positioniert wird.

6. Verfahren nach Anspruch 5, dadurch gekennzeichnet, daß das Stempelmuster (13, 59) sich an einem Ende (11, 57) des Dorns (9) befindet, wobei das Ende (11, 57) des Dorns (9) in einer Preßkammer (29) des Außenlagerteils (17, 61) vorgesehen wird, die sich kegelförmig erstreckt und in eine Öffnung (35) vor dem Preßwerkzeug (37) mündet, während danach das duktile Material (36) in der Preßkammer (29) mit Hilfe des Preßwerkzeugs (37) um das Ende (11, 57) des Dorns (9) gepreßt wird.

7. Verfahren nach Anspruch 6, dadurch gekennzeichnet, daß ein Dorn (9) mit einem Freigabeende (11, 57) verwendet wird.

8. Verfahren nach Anspruch 5, dadurch gekennzeichnet, daß das duktile Material (100) zwischen einer sich senkrecht zu der Mittellinie (93) des Anßenlagerteils (91) erstreckenden oberen Fläche (95) des Außenlagerteils (91) und einer sich senkrecht zu einer Mittellinie (75) des Dorns (77) erstreckenden Preßfläche (81) des Stempels(73), auf dem sich das Stempelmuster (83) befindet, angebracht wird und daß danach mit Hilfe des Preßwerkzeugs (101) und des Stempels (73) auf der oberen Fläche (95) gepreßt wird, wobei die plastische Verformung des duktilen Materials (100) in radialer Richtung stattfindet und das duktile Material (100) in einer ringförmigen Rille (99) eines auf der oberen Fläche (95) vorgesehenen Kragens (97) fixiert wird.

9. Verfahren nach Anspruch 3, dadurch gekennzeichnet, daß die Lagerfläche (299, 301) mit dem Rillenmuster (295, 297) in einer ringförmigen Scheibe (293) gebildet wird, die aus einem duktilen Material gefertigt wird, wobei die ringförmige Scheibe (293) zunächst um den Innenlagerteil (263) zwischen einer Preßfläche (269) eines ersten Stempels (265), auf der ein erstes Stempelmuster (273) vorgesehen ist und die sich senkrecht zu einer Mittellinie (291) des Innenlagerteils (263) erstreckt, und einer Preßfläche (283) eines zweiten Stempels (279), auf der ein zweiten Stempelmuster (287) vorgesehen ist und die sich senkrecht zu der Mittellinie (291) des Innenlagerteils (263) erstreckt, während die ringförmige Scheibe (293) danach durch das Preßwerkzeug zwischen den Preßflächen (269, 283) des ersten Stempels (265) und des zweiten Stempels (279) gepreßt wird, wobei die plastische Verformung des duktilen Materials in radialer Richtung gegenüber der Mittellinie (291) erfolgt und die ringförmige Scheibe (293) in einer umlaufenden Rille (289) in dem Innenlagerteil (263) fixiert ist.

10. Verfahren nach einem der vorstehenden Ansprüche, dadurch gekennzeichnet, daß der Stempel (73) bei der Bildung der Lagerfläche (103) in axialer Richtung mit Hilfe eines Sensors (155) gegenüber dem betreffenden Lagerteil (91) positioniert wird, wobei mit diesem Sensor (155) eine axiale Lage des Stempels (73) gegenüber dem betreffenden Lagerteil (91) gemessen wird.

11. Verfahren zum Herstellen einer Datenspeichereinheit (209) mit einer Informationsscheibe (213) und einer Abtasteinheit (219) zum Zusammenarbeiten mit der Informationsscheibe (213), wobei diese Scheibe (213) drehend unterstützt wird in einer kassettenförmigen Gehäuse (211) durch zwei dynamische Rillenlager (233, 239; 235, 241), wobei das Gehäuse (211) zwei Hauptwände (221, 223) aufweist, die sich parallel zu und auf beiden Seiten der Informationsscheibe (213) erstreckt, wobei nach diesem Verfahren di Außenlagerteile (233, 235) der dynamischen Rillenlager (233, 239; 235, 241) in die Hauptwände (221, 223) integriert und mit je einem Rillenmuster versehen sind, dadurch gekennzeichnet, daß die Rillenmuster in den Außenlagerteilen (233, 235) vorgesehen sind und diese Außenlagerteile (233, 235) in die betreffenden Hauptwände (221, 223) integriert sind durch ein Verfahren nach Anspruch 4.

12. Verfahren zum herstellen einer drehbaren Abtasteinheit (123) mit einer Basistrommel (127), die eine Außenwand (141) mit einer schraubenlinienförmigen Magnetbandführung (143), und eine gegenüber der Basistrommel (127) drehbaren Abtasttrommel (129) aufweist, die wenigstens einen Magnetkopf (139) aufweist, wobei nach diesem Verfahren die Abtasteinheit (123) mit einem dynamischen Rillenlager (111) und die Basistrommel (127) mit einem Außenlagerteil (91) des dynamischen Rillenlagers (111) versehen wird, dadurch gekennzeichnet, daß das dynamische Rillenlager (111) nach einem Verfahren nach Anspruch 5, 6, 7 oder 8 hergestellt wird.

13. Verfahren zum Herstellen einer drehbaren Abtasteinheit (123) nach Anspruch 12, dadurch gekennzeichnet, daß die Magnetbandführung (143) als Bezugselement für die axiale Positionierung des Stempelmusters (83) des Stempels (73) gegenüber dem Außenlagerteil (91) benutzt wird.

14. Verfahren zum Herstellen einer Magnetbandeinrichtung (157), wobei nach diesem Verfahren die Magnetbandeinrichtung mit einer drehbaren Abtasteinheit (123), einem Raum (159) zum Unterbringen einer Magnetbandkassette (161) und mit einem Mechanismus (163) zum Transportieren und Führen eines Magnetbandes (125) an der Abtasteinheit (123) entlang versehen wird, dadurch gekennzeichnet, daß die Abtasteinheit (123) nach einem Verfahren nach Anspruch 12 oder 13 hergestellt wird.

## Revendications

1. Procédé de fabrication d'un palier à gorges dynamique (45, 71, 111) comportant un élément de palier interne (47, 67, 113) qui est disposé de manière coaxiale par rapport à un élément de palier externe (17, 61, 91), lesquels éléments de palier (17, 47; 61, 67; 91, 113) peuvent tourner l'un par rapport à l'autre et sont soumis à au moins une force d'appui axiale pendant cette rotation, procédé par lequel les éléments de palier (17, 47; 61, 67; 91, 113) sont pourvus de surfaces d'appui coopérantes (53, 39; 69, 63; 121, 103), la surface d'appui (39, 63, 103) de l'un des éléments de palier (17, 61, 91) étant façonnée et simultanément pourvue d'un motif de gorges (41, 65, 105) au moyen d'une matrice (1, 55, 73) qui présente un motif de matrice (13, 59, 83) correspondant au motif de gorges (41, 65, 105), caractérisé en ce que ledit élément de palier (17, 61, 91) est d'abord pourvu d'un matériau ductile (36, 100) et, ensuite, la surface d'appui (39, 63, 103) dudit élément de palier (17, 61, 91) est façonnée et simultanément pourvue du motif de gorges (41, 65, 105) par le biais de la déformation plastique dudit matériau ductile (36, 100) au moyen de ladite matrice (1, 55, 73) et d'un outil de pressage (37, 101).

2. Procédé suivant la revendication 1, caractérisé en ce que le matériau ductile (36, 100) est un alliage d'étain et de plomb, un alliage d'étain et d'antimoine, ou un alliage d'étain, de plomb et d'antimoine.

3. Procédé suivant la revendication 1 ou 2, caractérisé en ce qu'une position fixe est attribuée à la surface d'appui (39, 63, 103) présentant le motif de gorges (41, 65, 105) par rapport audit élément de palier (17, 61, 91) par la déformation plastique du matériau ductile (36, 100).

4. Procédé suivant la revendication 1, 2 ou 3, caractérisé en ce que la surface d'appui (203) présentant le motif de gorges (205) est intégrée dans un boîtier (195) par la déformation plastique du matériau ductile (201), le boîtier (195) étant fixé sur un établi (193) d'un appareil de pressage (185) qui comprend un dispositif de positionnement (191) au moyen duquel la matrice (187) est positionnée par rapport à l'établi (193) et au boîtier (195) pendant la formation de la surface d'appui (203).

5. Procédé suivant la revendication 1, 2 ou 3, caractérisé en ce que la surface d'appui (39, 63, 103) présentant le motif de gorges (41, 65, 105) est formée dans l'élément de palier externe (17, 61, 91) tandis que la matrice (1, 55, 73) comprend un mandrin (9, 77) qui s'adapte à l'élément de palier externe (17, 61, 91) et au moyen duquel la matrice (1, 55, 73) est positionnée par rapport à l'élément de palier externe (17, 61, 91) pendant la formation de la surface d'appui (39, 63, 103).

6. Procédé suivant la revendication 5, caractérisé en ce que le motif de matrice (13, 59) est présent à une extrémité (11, 57) du mandrin (9), l'extrémité (11, 57) du mandrin (9) étant appliquée dans une chambre de compression (29) de l'élément de palier externe (17, 61) qui va en se rétrécissant et se fond dans une ouverture (35) pour l'outil de pressage (37), tandis que par la suite le matériau ductile (36) est pressé autour de l'extrémité (11, 57) du mandrin (9) dans la chambre de compression (29) au moyen de l'outil de pressage (37).

7. Procédé suivant la revendication 6, caractérisé en ce qu'un mandrin (9) pourvu d'une extrémité de dégagement (11, 57) est utilisé.

8. Procédé suivant la revendication 5, caractérisé en ce que le matériau ductile (100) est disposé entre une surface supérieure (95) de l'élément de palier externe (91), laquelle surface supérieure (95) s'étend perpendiculairement à une ligne de centre (93) de l'élément de palier externe (91), et une surface de pression (81) de la matrice (73), surface de pression (81) sur laquelle le motif de matrice (83) est présent et qui s'étend perpendiculairement à une ligne de centre (75) du mandrin (77), et est par la suite pressé sur la surface supérieure (95) par l'outil de pressage (101) et la matrice (73), par lequel la déformation plastique du matériau ductile (100) se produit dans une direction radiale et le matériau ductile (100) est fixé dans une gorge annulaire (99) d'une bague (97) disposée sur la surface supérieure (95).

9. Procédé suivant la revendication 3, caractérisé en ce que la surface d'appui (299, 301) présentant le motif de gorges (295, 297) est formée dans un disque de forme annulaire (293) qui est fait du matériau ductile, le disque de forme annulaire (293) étant prévu tout d'abord autour de l'élément de palier interne (263) entre une surface de pression (269) d'une première matrice (265), surface de pression (269) sur laquelle est présent un premier motif de matrice (273) et qui s'étend perpendiculairement à une ligne de centre (291) de l'élément de palier interne (263), et une surface de pression (283) d'une deuxième matrice (279), surface de pression (283) sur laquelle est présent un deuxième motif de matrice (287) et qui s'étend perpendiculairement à la ligne de centre (291) de l'élément de palier interne (263), tandis que le disque de forme annulaire (293) est par la suite pressé par l'outil de pressage entre les surfaces de pression (269, 283) de la première matrice (265) et de la deuxième matrice (279), de sorte que la déformation plastique du matériau ductile se produit dans une direction radiale par rapport à la ligne de centre (291) et le disque de forme annulaire (293) est fixé dans une gorge annulaire (289) prévue dans l'élément de palier interne (263).

10. Procédé suivant l'une quelconque des revendications précédentes, caractérisé en ce que la matrice (73) est positionnée dans la direction axiale par rapport audit élément de palier (91) à l'aide d'un capteur (155) pendant la formation de la surface d'appui (103), lequel capteur (155) mesure une position axiale de la matrice (73) par rapport audit élément de palier (91).

11. Procédé de fabrication d'une unité de stockage de données (209) comprenant un disque de données (213) et une unité d'analyse (219) destinée à coopérer avec le disque de données (213), lequel disque (213) est supporté à rotation dans un boîtier en forme de cassette (211) au moyen de deux paliers à gorges dynamiques (233, 239; 235, 241), le boîtier (211) comprenant deux parois principales (221, 223) s'étendant parallèlement au disque de données (213) et d chaque côté de celui-ci, procédé suivant lequel les éléments de paliers externes (233, 235) des paliers à gorges dynamiques (233, 239; 235, 241) sont intégrés dans lesdites parois principales (221, 223), respectivement, et sont chacun pourvus d'un motif de gorges, caractérisé en ce que les motifs de gorges sont prévus dans les éléments de paliers externes (233, 235) et les éléments de palier externes (233, 235) sont intégrés dans les parois principales respectives (221, 223) par un procédé suivant la revendication 4.

12. Procédé de fabrication d'une unité d'analyse rotative (123) comportant un tambour de base (127) qui présente une paroi externe (141) avec un guide de bande magnétique hélicoïdal (143) et un tambour d'analyse (129) qui peut tourner par rapport au tambour de base (127) et qui comporte au moins une tête magnétique (139), procédé selon lequel l'unité d'analyse (123) est pourvue d'un palier à gorges dynamique (111), le tambour de base (127) étant pourvu d'un élément de palier externe (91) du palier à gorges dynamique (111), caractérisé en ce que le palier à gorges dynamique (111) est fabriqué selon un procédé suivant la revendication 5, 6, 7 ou 8.

13. Procédé de fabrication d'une unité d'analyse rotative (123) suivant la revendication 12, caractérisé en ce que le guide de bande magnétique (143) est utilisé comme référence pour le positionnement axial du motif de matrice (83) de la matrice (73) par rapport à l'élément de palier externe (91).

14. Procédé de fabrication d'un appareil à bande magnétique (157), procédé suivant lequel l'appareil à bande magnétique est pourvu d'une unité d'analyse rotative (123), d'un espace (159) pour le logement d'une cassette de bande magnétique (161), et d'un mécanisme (163) pour le transport et le guidage d'une bande magnétique (125) le long de l'unité d'analyse (123), caractérisé en ce que l'unité d'analyse (123) est fabriquée selon un procédé suivant la revendication 12 ou 13.
